Europäisches Patentamt

(19) European Patent Office

Office européen des brevets

(11) EP 0 918 238 A1

(12) EUROPEAN PATENT APPLICATION

(43) Date of publication:
26.05.1999 Bulletin 1999/21

(51) Int. Cl.⁶: G02B 6/42

(21) Application number: 97308458.5

(22) Date of filing: 23.10.1997

(84) Designated Contracting States:
AT BE CH DE DK ES FI FR GB GR IE IT LI LU MC
NL PT SE
Designated Extension States:
AL LT LV RO SI

(71) Applicant:
Hewlett-Packard Company
Palo Alto, California 94304 (US)

(72) Inventors:
• Meadowcroft, Simon George Preston
Stowmarket, Suffolk IP14 1TY (GB)

• Dye, Steven Philip
Ipswich, Suffolk IP3 8DS (GB)
• Goode, Alan Andrew
Ipswich, Suffolk IP11 OYR (GB)

(74) Representative:
Lawrence, Richard Anthony et al
Hewlett-Packard Limited,
IP Section,
Building 2,
Filton Road
Stoke Gifford, Bristol BS12 6QZ (GB)

(54) Optical device for connecting a semiconductor device and a waveguide.

(57) A connector is provided containing a fibre stub 8 for allowing passage of light between a semiconductor device and a waveguide. The connector is particularly appropriate for passage of light between a semiconductor laser and an optical fibre of a fibre optic network. The fibre stub has at least one surface 33 in the cladding 32 adapted to prevent light travelling in the cladding substantially parallel to the longitudinal axis of the fibre stub. This surface may be reflecting, either through a reflecting coating or by being angled so as to be totally internally reflecting, or may be coated with an attenuating material. The surface 33 may be an angled surface at an end face of the fibre stub, and the fibre stub built up to a flat end by addition of light attenuating material over the angled surface 33 of the cladding: a method of carrying this out is described.

Fig. 1

## Description

This invention relates to optical devices, and is particularly relevant to the coupling of optical devices to optical fibres or other forms of optical waveguide. It has special relevance for lasers and the connection of light emitters, such as lasers, to optical fibres.

Lasers, particularly semiconductor diode lasers, are commonly used in optical communications applications. It is often desirable for these applications, which include telecommunications and data networks, for such light emitters to be provided so as to allow easy connection to and disconnection from an optical fibre transmission line. "Optical communications" refers in this context to any appropriate electromagnetic radiation for communication transmitted through a waveguide network: in particular, it extends to infra-red communications.

For an adequate signal to be propagated through an optical communications network, it is desirable for significant signal to be coupled into the optical fibre transmission line: 200 μW of power would be a typical amount of signal required for such applications. However, coupling efficiency from a laser is sufficiently low that this may require, say, 10 mW of light to be emitted by the laser. The remainder of the light produced is lost in coupling light to the optical fibre transmission line.

This lost light may give rise to a safety problem. While 200 μW of laser light is insufficient to provide significant risk of eye damage, 10 mW may well be sufficient. Consequently, if the optical fibre transmission line is disconnected from a laser transmitter device while the laser is still in operation, there is a danger that several milliwatts of light will emit into the environment with a consequent risk to eye safety. If communication is made at wavelengths such as 1.3 μm, typical in optical communications networks, then the risk is increased as the radiation is invisible to the human eye.

A solution to this problem is suggested in International Patent Application Publication No. WO 91/10932. This document proposes the connection of a semiconductor laser to an optical fibre through an intermediate stub of optical fibre (described as an "optical baffle"). This intermediate stub is mounted within the laser housing, so that light from the laser is coupled into the stub, and then from the stub into the optical fibre of a communications network: the stub and the communications network fibre are mode matched to optimise this coupling. The stub is held in the housing by adhesive around its diameter. This adhesive is mode matched to the cladding.

The consequence of this arrangement is the stripping out of unwanted modes of light. The mode or modes for onward transmission to the optical fibre, once coupled into the core of the stub, will exist almost wholly in the core until transmitted out to the optical fibre: this arrangement has little or no effect on the "signal" modes. However, light at other modes will be created by the light source. This light will not be effectively guided by the stub, which will have optimal waveguiding properties only for the signal modes: light at non-signal modes will thus spend significant time in the cladding. It is the light at these non-signal modes that it would be desirable to remove, because such light does not provide useful signal but can contribute to the eye safety risk. The mode matching of the adhesive to the cladding means that such non-signal modes are refracted out of the cladding and in to the adhesive, where they will be absorbed.

This approach does significantly reduce the amount of light in non-signal modes, but it does not eliminate it altogether. For meeting of the relatively strict guidelines now adopted worldwide, especially the CDRH standards in the United States, it would be desirable for an even greater proportion of the non-signal light to be removed to allow higher coupled signal powers to be used.

There are further possible advantages in structures that remove more light in the non-signal modes. For data communications, there is now strong interest in the coupling of signal from single mode sources into multimode fibre. Achieving effective single mode transmission through multimode fibre is commercially important, as it may enable very high rates of data transmission to be achieved through preinstalled data networks without extensive replacement of existing multimode fibre. Such preinstalled networks typically used light emitting diode transmitters: much higher data rates can be achieved by using semiconductor lasers. Launch from existing laser sources, even through fibre stubs removing a proportion of the non-signal modes, has proved difficult: a particular difficulty is in maintaining an acceptable signal bandwidth after transmission through a significant length of multimode fibre. With conventional arrangements, it is found that a length of at least 1.5m of single mode fibre is required between the laser source and the multimode fibre to maintain acceptable signal bandwidth. Removal of more of the non-signal modes could allow signal bandwidth to be maintained over longer lengths of fibre, thus making recabling or addition of extra lengths of single mode fibre unnecessary where multimode fibre is already installed.

It would therefore be particularly advantageous to devise a form of connector which allows for removal of a higher proportion of the non-signal modes than do existing fibre stub arrangements or known alternatives thereto.

Accordingly, the invention provides a connector means for connection of an optical semiconductor device to an optical waveguide comprising: means for mounting the connector to an optical device; means for mounting the connector to an optical waveguide; a stub of optical fibre within the connector mounted such that in use, light passes through the connector between the optical device and the optical fibre through the stub of optical fibre, the stub of optical fibre having a core and a cladding; wherein the stub of optical fibre comprises therein at least one surface in the cladding at an angle to the longitudinal axis of the fibre stub adapted to prevent travel of light through the cladding parallel to the longitudinal axis of the fibre stab.

This is especially advantageous when the optical waveguide is an optical fibre, typically of a fibre optic network, and the optical device is a semiconductor laser. The adaption of a cladding surface to prevent travel of light through the cladding parallel to the longitudinal axis of the fibre stab prevents outward transmission of light from the cladding in the direction of the optical waveguide, thus enhancing eye safety and allowing greater signal powers to be used.

If the optical fibre used in the stab is single mode fibre, the connector can be used advantageously in a method of launching light into a multimode fibre by emitting light from a semiconductor laser into a multimode fibre through the connector as described above.

The adaption of the cladding surface can be achieved in a number of different ways. Particularly advantagous is the forming of an end face to the cladding which makes an acute angle, as measured in the fibre stab, to the longitudinal axis of the fibre stab. If appropriately sized, the angled cladding face can totally internally reflect light travelling through the cladding in the direction of the longitudinal axis of the fibre stub. The angled face may also be coated with a reflecting layer (thus achieving the same effect as total internal reflection) or, preferably, an attenuating layer. The use of an attenuating layer is preferable, as it provides direct removal of unwanted non-signal modes. An appropriate epoxy resin is a suitable choice.

In a further aspect, the invention provides a transmitter comprising an optical transmitter and a connector means as described above.

In a still further aspect, the invention provides a method of preparing an optical fibre end, comprising: removing material from one end of an optical fibre length such that the one end of the optical fibre length has a substantially conical or pyramidal form; and polishing the conical or pyramidal fibre end to obtain a substantially frustoconical form with a substantially planar end face for the fibre core and an end face for the fibre cladding substantially at an angle to the end face for the fibre core.

This step of removing material may be effected by laser ablation, in which case the method advantageously also comprises the step of drawing the optical fibre before laser ablation, wherein after the step of laser ablation the outer diameter of the optical fibre is substantially uniform up until the end face. Alternatively, the step of removing material can be carried out through grinding to a conical or pyramidal tip.

It is also advantageous after the step of laser ablation to place an optical fibre into a ferrule such that a cone apex of the conical end face of the fibre is substantially collinear with a face of the ferrule, wherein the step of polishing the ablated fibre end comprises polishing away a predetermined length of the ferrule. Further advantages are provided if a region of the ferrule bounded by the optical fibre, an inner diameter of the ferrule, and the face of the ferrule is before the step of polishing the ablated fibre end filled with light attenuating material.

Specific embodiments of the invention are described in detail below, by way of example, with reference to the accompanying Figures, in which:

Figure 1 shows an optical transmitter comprising a connector means according to an embodiment of the invention.

Figure 2 shows an end face of an optical fibre stub in the connector means of Figure 1.

Figure 3 shows a step of drawing an optical fibre in a method of preparing a fibre end in accordance with an embodiment of the invention.

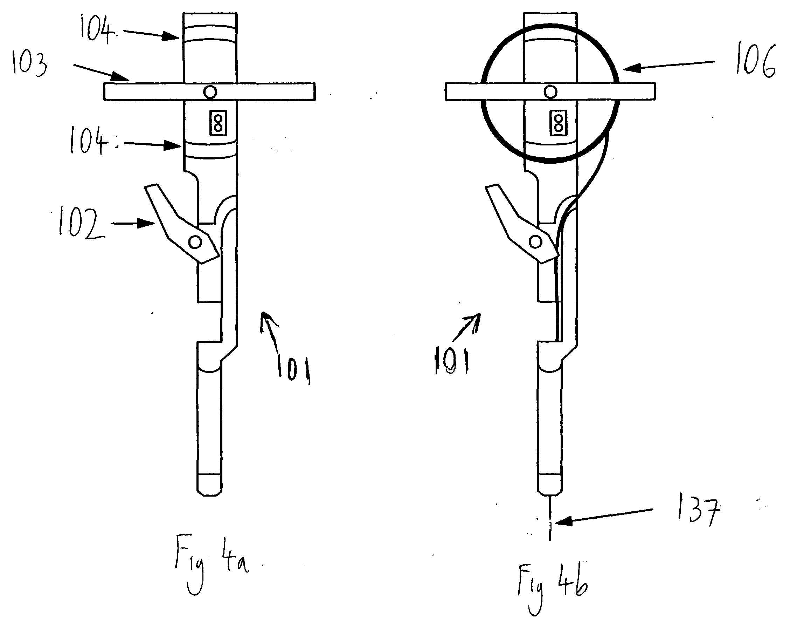

Figure 4 shows a device for holding optical fibre for laser ablation thereof.

Figure 5 shows equipment for laser ablation of an optical fibre end for use in a method of preparing a fibre end in accordance with an embodiment of the invention.

Figure 6 shows an ablated optical fibre end in a method of preparing a fibre end in accordance with an embodiment of the invention.

Figure 7 shows the ablated optical fibre end of Figure 6 treated with light attenuating material.

Figure 8 shows a fibre stub according to a further embodiment of the invention.

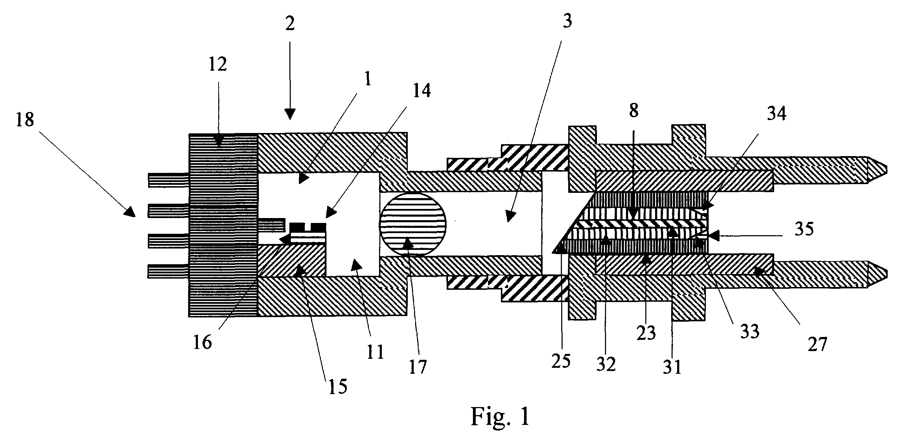

Figure 1 shows an arrangement in which an optical transmitter 1 is mounted in a housing 2 of an optical fibre connector. The housing 2 has an axial bore 3. At one end of the bore 3 is mounted the transmitter 1, which is secured to the housing 2. The remote end of the housing is constructed according to the form of connector used (such as MT or SC) and may thus be of entirely conventional construction.

The transmitter 1 comprises a base plate 12 (also referred to as a 'header'), which forms part of a sealed enclosure housing a laser 14 mounted on a heat sink 15. Also mounted on the heat sink 15 is a monitor diode 16 to monitor the output of the laser 14 by detecting light emitted from its back facet. Laser 14 and monitor diode 16 can be of any conventional construction suitable for an optical transmitter of this form factor. The main beam emitted by laser 14 is focussed by ball lens 17. Ball lens 17 also provides a hermetic seal in axial bore 3, enabling a hermetic enclosure 11 to be constructed around the components of the transmitter 1.

Electrical connections to the laser are via pins 18, of which one is electrically connected to the header 12 and provides electrical connection to the laser 14 by way of the heat sink 15. The other electrical connections pass through an insulating seal into the interior of the enclosure 11 and is electrically connected via bond wires to the relevant components.

Other arrangements of light source and lenses may, of course, be used instead, such as for example a conventional arrangements employing graded index (GRIN) lenses.

At its end opposite the transmitter 1, the axial bore 3 is open to provide a receptacle for an optical fibre located in a connector ferrule. Another ferrule 23, supporting a waveguide in the form of a fibre stub 8, is secured within the central bore 3. (The fibre stab 8 is located in a central bore 24 of the support ferrule 23, and is secured within the bore 24 by adhesive 40. The adhesive 40 may be an index matched adhesive to assist further in stripping "cladding modes" from the fibre stub 8). The waveguide 8 is a length of optical fibre - depending on the intended use, this may be single mode or multimode fibre. However, for many uses it will be advantageous for this waveguide 8 to be of single mode fibre.

The ferrule 23 is chosen to have the same external diameter as the connector ferrule. Radiation from the laser 14 is coupled via the spherical lens 17 into the fibre stub 8.

Fitted about the ceramic ferrule 23 is a split ferrule sleeve 27, which is arranged to centre and lightly clamp the end of the connector ferrule when inserted. In order to allow a small amount of radical expansion of the split ferrule 27, to accommodate variation in diameter of the ferrule 7, its external surface makes a loose fit within the corresponding section of the axial bore 3.

The precise external shape of the housing 2 and any alignment surfaces will, of course, be determined by the need for matching which ever type of optical fibre connector is employed.

In order to reduce back reflections into the transmitter enclosure 11, the end face 25 of the ferrule 23 which is nearest the ball lens 17 is set at an angle to the bore axis. This angle (exaggerated for effect in Figure 1) is advantageously of the order of 8°. This contributes to reflections being directed by the angled end face 25 away from the ball lens 17 and the enclosure 11.

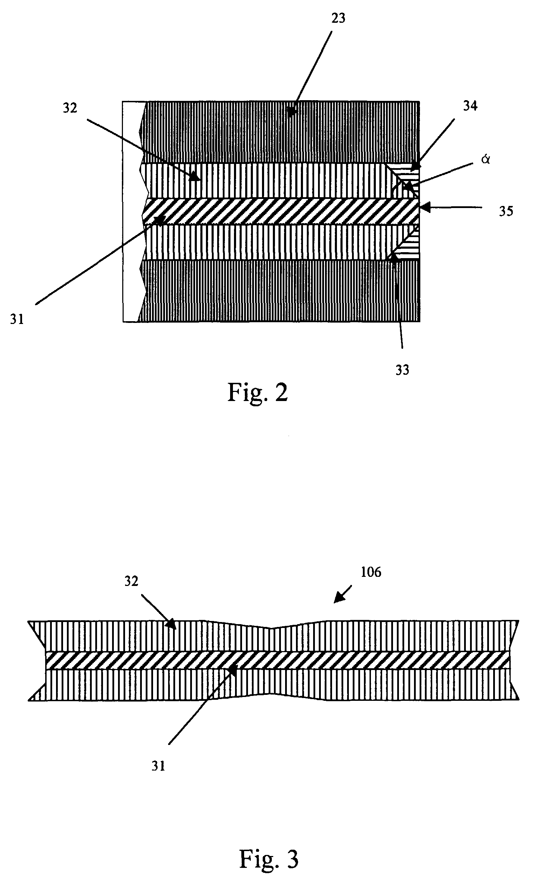

The arrangement described above is closely comparable that taught in International Patent Application Publication No. WO 91/10932 and the differences indicated in the above are not central to the present invention. A key difference lies in the specific construction of the fibre stub. This is shown most clearly in Figure 2, which is a view of the output end of the fibre stub 8 and the ceramic fibre ferrule 23. The stub 8 comprises, as is typical for an optical fibre, a core 31 and a cladding 32. At the end 35 of the stub 8 remote from the optical transmitter 1, the core 31 terminates in a substantially flat face. The cladding 32, however, is largely or wholly absent from the end 35 of the stub 8. This is because the cladding 32 ends in an angled face 33 which makes an acute angle (as measured within the stub) to the longitudinal axis of the stub 8. The gap 34 between the angled face 33 and the end 35 of the stub is in this embodiment filled with a substance which blocks the onward passage of light from the cladding.

The effect of providing this filled gap 34 is to prevent onward transmission of a large proportion of non-signal mode light. Light in the signal modes will travel almost exclusively within the core 31. As the core 31 itself is not affected by the replacement of a part of the cladding 32 with filled gap 34, this light will be substantially unaffected. However, the non-signal mode light travels largely in the cladding. Consequently, much of this light will impact on angled face 33.

What happens after the impact of light on angled face 33 depends on the nature of the material used in filled gap 34. A preferred choice of material would be adapted to absorb substantially all the light incident upon angled face 33. For this to be achieved, the material used in filled gap 34 should be highly attenuating. A particularly suitable choice is an epoxy resin such as Epotek 320. An alternative possibility is to use a pigmented version of a resin such as Epotek 353ND. Satisfactory results are found with a basic Epotek 353ND resin loaded with 3.5% to 14% black paste: this resin is here termed Epotek 353ND-Black. If the material used is not highly attenuating but has a refractive index close to that of the cladding, there will clearly be no beneficial effect - the filled gap 34 will then function exactly as the section of cladding 32 it replaces.

An alternative to using an attenuating material in filled gap 34 is to use a reflective material. This also prevents the onward transmission of non-signal modes in the cladding, but in certain applications may prove less advantageous than use of an attenuating material. This is because the unwanted light is not removed, but reflected back within the cladding. Most of such light will eventually be absorbed within the housing 2, but some may escape the fibre stub 8 through the core 31 and some may also be reflected back into the laser 14. Either of these possibilities may adversely affect the signal entering the optical fibre connected to the housing. If this approach is used, it may prove advantageous to provide a significant quantity of absorbing material in the region between the transmitter can 13 and the input face of the fibre stub 8 (though not in the optical path from the laser 14 through the window 21 into the fibre stub core 31). An alternative to using a reflective material in filled gap 34 is to use no material at all. If a suitable angle, such as 45 degrees, is chosen for angled face 33, then the refractive index of the cladding with regard to that of air or vacuum (with which gap 34 is then "filled") would be such that light travelling substantially parallel to the longitudinal axis of the fibre stub 8 would be totally internally reflected (or alternatively refracted so far away from the main beam that they provide no light hazard).

A wide range of angles is found to be acceptable in practice. If the angle is steep (in that there is a sharp point on the cone that would be formed from angled face 33 considered as a cone surface), then stripping out of cladding modes will be especially effective. The primary difficulty with use of a steep angle is a reduction in the strength of the fibre. If the angle is shallow, then structural strength will not cause a difficulty, but the likelihood of cladding modes escaping out with the signal light increases. An acceptable range of angles for angle $\alpha$ between the fibre stub axis and the angled face 33 (as shown in Figure 2) is 25° to 45°.

The invention relates to prevention of light travelling through the cladding from travelling onwards in the direction of the longitudinal axis of the fibre stub 8. It is not limited to provision of such an arrangement at the end of the stub 8 remote from the optical transmitter 1. A similar arrangement to angled face 33 can readily be provided at the input face of the fibre stub 8 and can prevent light from entering the stub 8 outside the core region, and can also absorb light reflected back along the stub - such an arrangement could be used together with an output angled face 33 as indicated above. It may even be advantageous to use such an arrangement without an output angled face: perhaps together with a reflecting end to the fibre stub 8 for the non-core regions.

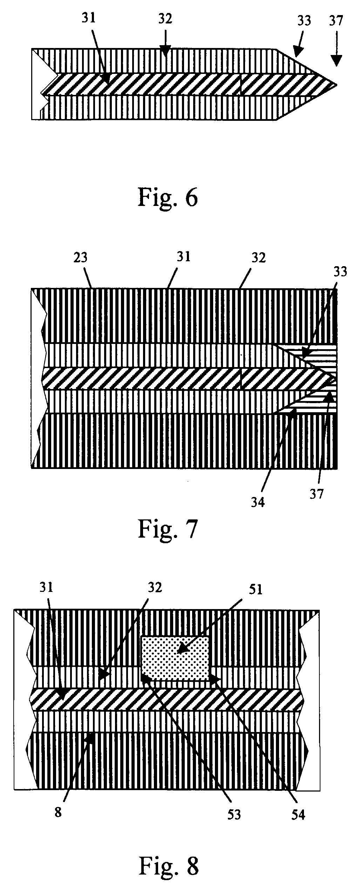

Alternative forms of cladding surface can be devised to have the function of impeding travel of light through the cladding parallel to the longitudinal axis of the fibre stub 8. An example is shown in Figure 8, which illustrates a stub 8 with a slot 51 formed in the cladding 32 between two intermediate cladding surfaces 53 and 54. The slot is milled out from the fibre stub 8 by any suitable process. The slot extends into the ferrule 23, by means of a milling step before insertion of the fibre stub 8. The slot is filled with light attenuating material of the same variety used in the embodiment described above to fill gap 34. Use of a slot in the ferrule 23 also ensures that there is glue all around the edge of the fibre, which would otherwise be difficult with this arrangement. This arrangement does not block light completely in the cladding, but it substantially reduces the quantity of non-signal light passing through the cladding.

Fabrication of the fibre stub 8 as shown in Figures 1 and 2 is described below. The fibre stub is formed from a length of conventional fibre. For most applications, it will be advantageous to use single mode fibre (such as SMF-28) in the fibre stub 8.

The first step, as shown in Figure 3, is to draw the fibre by a predetermined amount in the presence of an electrical arc formed between two electrodes, such as that provided by a conventional optical fusion splicer. This has the effect of "necking" the fibre slightly, reducing the outer diameter of the fibre in the drawn region. The reason for introducing this necking is discussed below. The next step is to cut the fibre in the necked region, so that the fibre end (where the angled surface 33 of the cladding 32 is to be formed) is slightly smaller in diameter than for the greater part of the fibre.

The next step is to ablate a portion of the fibre to give it a conical tip. This can be carried out appropriately with a $CO_2$ laser. Methods for forming microlenses on optical fibres by laser ablation are described in US Patent Nos. 4932989 and 5256851, assigned to AT&T Bell Laboratories. Essentially similar approaches can be followed here.

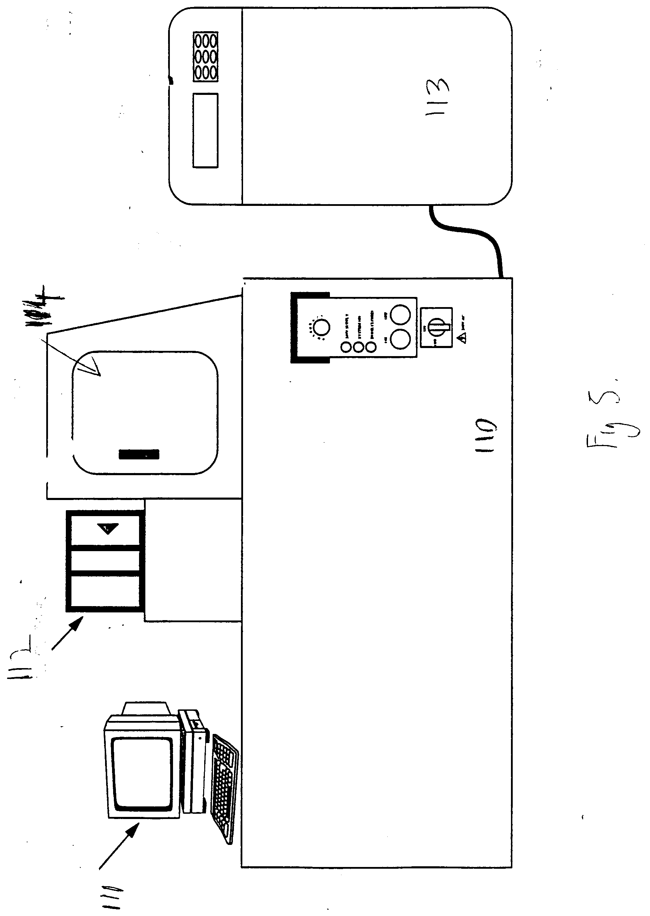

Figure 5 shows a cassette apparatus 101 for mounting the optical fibre 106. A curled length of the fibre is held within a groove 104 and by a cross arm 103, to ensure stability of mounting, and is retained in position by a retaining clip. A predetermined length of fibre 137 protrudes from the end of the cassette 101.

The cassette is inserted into ablation apparatus 110 which contains the $CO_2$ laser through door 114 and mounted carefully so that the axis of the optical fibre 106 lies on a rotation axis. The cassette is mounted so that the longitudinal axis of the optical fibre is at a predetermined angle to the axis of the ablating laser beam. The laser is powered by a separate supply unit 113 and the whole ablation apparatus controlled from a computer 111. A fibre monitor 112 is provided to allow visual monitoring of the state of the ablated fibre end.

The ablation is, preferably, a three stage process. Firstly, the major part of the material to be removed is ablated away, with the cassette 101 rotating at approximately 60 rpm. In the next stage, the resulting fibre surface is made smooth, the rotational speed of the cassette being increased to approximately 200 rpm. In the final stage, the exact shaping of the fibre end 137 is achieved, the cassette being rotated again at approximately 200 rpm and the laser beam being controlled so as to provide the desired conical angle for the fibre end 137.

In the ablation process, some of the ablated material flows back, slightly increasing the diameter of the remaining fibre stub 8. This diameter increase is matched by the original drawing process - the aim of the initial drawing process is to provide a fibre stub 8 with uniform outer diameter after ablation to form the conical tip 37.

Angled surface 33 in the cladding 32 has now been formed, as can be seen from Figure 6 - however, the core is not yet adequately shaped. This can be done by inserting the stub 8 into a block with an axial bore: advantageously, this can be the ferrule 23. A solid surface is placed at the end of the block so that the conical tip 37 abuts it when pushed through the bore. The gap region 34 is now effectively defined between the angled surface 33 of the cladding and the solid surface and it is appropriate to deposit the attenuating epoxy resin (Epotek 320 or Epotek 353ND-Black) or other material to fill this region. This position is shown in Figure 7.

Although formation of the conical tip by laser ablation is described here, it will be appreciated by the skilled man that a number of alternative approaches are available for forming the desired conical tip. For example, a grinding method could be used, in which the fibre is rotated about its central axis and abutted against a grinding surface at an oblique angle so that grinding to a conical tip is achieved. A further approach applicable is to hold the fibre tip in a fixed angled orientation against a grinding surface (for example, a grinding belt or wheel) to form a bevelled surface. This is followed a sequence of steps, each involving rotation of the fibre through a predetermined angle to a further fixed position followed by a grinding step: the result is a substantially pyramidal point. More complex grinding arrangements may result in more complex bevelled tip structures, which may also be suitable for the intended purpose. Further alternative approaches are use of an arc alone to form the desired shape and use of chemical etching.

The next step is to form the flat end face to the core 31. As the conical tip 37 of the core is now at the end of the fibre stub 8, and the angle of angled surface 33 is determined at the time of its formation, this is straightforward. Polishing away a known thickness of material ($r/\tan \theta$, where r is the radius of the core and $\theta$ is the angle of angled surface 33) enables the end of core 31 to be polished flat while the cladding 32 maintains angled surface 33, and hence an attenuating coating in filled gap region 34. The final position is as shown in Figure 2.

Different effects are achieved by over or under polishing the end face. If the face is underpolished, the angled surface 33 extends not only over all the end face of the cladding 32 but also over an annulus of the end face of the core 31. This means that attenuating material is present at the end of the whole of the cladding 32, but also at the end of a part of the core 31. This arrangement ensures that all cladding modes will be removed from onward transmission of light, but as part of the core is covered, the total emitted power coupled out of the fibre stub is reduced. If the end face is overpolished, the angled surface 33 will not extend across all of the cladding, and an annulus of the endface of the cladding is uncovered by attenuating material. In this arrangement, the total emitted signal power coupled out of the fibre stub is essentially unaffected, but some cladding modes will be transmitted on from the uncovered face of the cladding 32. A small amount of overpolishing or underpolishing will still allow a satisfactory improvement in the proportion of signal modes to cladding modes in the transmitted signal with adequate output power.

By providing a connector comprising a fibre stab with cladding adapted to prevent transmission of light parallel to the axis of the fibre stab, unwanted non-signal light can be removed thus improving eye safety of fibre stubs. Moreover, in the case of a fibre stab of single mode fibre, the improved mode profile achieved in the light emitted from the stub may also enable high bit rate signal traffic through fibre optic networks containing substantial quantities of multimode fibre.

## Claims

1. A connector means for connection of an optical semiconductor device to an optical waveguide comprising:

   means for mounting the connector to an optical device;

   means for mounting the connector to an optical waveguide;

   a stub of optical fibre within the connector mounted such that in use, light passes through the connector between the optical device and the optical fibre through the stub of optical fibre, the stub of optical fibre having a core and a cladding;

   wherein the stub of optical fibre comprises therein at least one surface in the cladding at an angle to the longitudinal axis of the fibre stub adapted to prevent travel of light through the cladding parallel to the longitudinal axis of the fibre stub.

2. A connector means as claimed in claim 1, wherein the optical waveguide is an optical fibre.

3. A connector means as claimed in claim 1 or claim 2, wherein the optical device is a laser.

4. A connector means as claimed in any preceding claim, wherein the optical fibre in the stub is single mode optical fibre.

5. A connector means as claimed in any preceding claim, wherein the at least one surface comprises an end face of the fibre stub which forms an acute angle within the fibre stub to the longitudinal axis of the fibre stub.

6. A connector as claimed in claim 5, wherein the angle between the longitudinal axis of the fibre stub and the at least one surface lies in the range of 25° to 45°.

7. A connector means as claimed in claim 5 or claim 6, wherein the acute angle is adapted such that light travelling in the cladding substantially parallel to the longitudinal axis of the fibre stub will be substantially wholly totally internally reflected at the at least one end surface.

**8.** A connector means as claimed in any of claims 5 to 7, wherein the at least one surface is coated with a light attenuating material.

**9.** A connector means as claimed in claim 8, wherein the light attenuating material is an epoxy resin.

**10.** A connector means as claimed in any of claims 5 to 7, wherein the at least one surface is uncoated.

**11.** A connector means as claimed in any of claims 5 to 10, wherein at said end face of the fibre stub the core presents substantially a single planar surface.

**12.** A connector means as claimed in any of claims 1 to 4, wherein the at least one surface comprises two surfaces spaced longitudinally along the fibre stub between the ends thereof, the two surfaces defining a notch in the cladding.

**13.** A connector means as claimed in claim 12, wherein the notch is filled with a light attenuating material.

**14.** A connector means as claimed in claim 13, wherein the light attenuating material is an epoxy resin.

**15.** An optical transmitter, comprising a semiconductor laser and a connector means as claimed in any preceding claim and further comprising a housing containing the semiconductor laser and the connector means aligned such that a substantial proportion of light emitted by the semiconductor laser enters the fibre stub of the connector means.

**16.** A method of preparing an optical fibre end, comprising:

removing material from one end of an optical fibre length such that the one end of the optical fibre length has a substantially conical or pyramidal form;

polishing the conical or pyramidal fibre end to obtain a substantially frustoconical form with a substantially planar end face for the fibre core and an end face for the fibre cladding substantially at an angle to the end face for the fibre core.

**17.** A method of preparing an optical fibre end as claimed in claim 16, wherein the step of removing material comprises laser ablating the one end of the optical fibre, the ablating laser beam being disposed at an angle to the longitudinal axis of the optical fibre.

**18.** A method of preparing an optical fibre end as claimed in claim 17, further comprising the step of drawing the optical fibre before laser ablation, wherein after the step of laser ablation the outer diameter of the optical fibre is substantially uniform up until the end face.

**19.** A method of preparing an optical fibre end as claimed in claim 16, wherein the step of removing material comprises grinding the one end of the optical fibre to provide said one end of the optical fibre with a conical or pyramidal form.

**20.** A method of preparing an optical fibre end as claimed in any of claims 16 to 19, comprising after the step of removing material placing the length of optical fibre into a ferrule such that a cone apex of the conical end face of the fibre is substantially collinear with a face of the ferrule, wherein the step of polishing the ablated fibre end comprises polishing away a predetermined length of the ferrule.

**21.** A method of preparing an optical fibre end as claimed in claim 20, wherein a region of the ferrule bounded by the optical fibre, an inner diameter of the ferrule, and the face of the ferrule is before the step of polishing the ablated fibre end filled with light attenuating material.

**22.** A method of preparing an optical fibre end as claimed in claim 21, wherein the light attenuating material is an epoxy resin.

**23.** A method of preparing a connector means as claimed in any of claims 1 to 14 wherein the at least one surface in the cladding of the fibre stub is formed by the method of any of claims 16 to 22.

**24.** A method of launching light into a multimode fibre comprising emitting light from a semiconductor laser into a multimode fibre through a connector means as claimed in claim 4.

Fig. 1

Fig. 2

Fig. 3

Fig 4a.

Fig 4b

Fig 5.

EP 0 918 238 A1

Fig. 6

Fig. 7

Fig. 8

## EUROPEAN SEARCH REPORT

| | | Application Number |
| :--- | :--- | :--- |
| **European Patent Office** | | **EP 97 30 8458** |

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
| :--- | :--- | :--- | :--- |
| X | US 5 490 227 A (TANABE MANABU ET AL)<br><br>* column 2, line 5 - line 25 *<br>* column 2, line 53 - line 62 *<br>* column 3, line 4 - line 7 *<br>* column 3, line 23 - line 26 *<br>* column 5, line 45 - column 6, line 5 *<br>* figures 1,5,6,10; examples 3,4,8,12,13 *<br>* figures 14,15 * | 1,2,4,5,<br>8,10-12 | G02B6/42 |
| Y | | 16-18 | |
| A | | 15,24 | |
| D,Y | US 4 932 989 A (PRESBY HERMAN M)<br>* abstract; figures 1,2,4,5 *<br>* column 2, line 49 - column 3, line 10 *<br>* column 3, line 30 - line 40 *<br>* column 6, line 29 - line 49 * | 16-18 | |
| A | EP 0 683 410 A (SEIKO GIKEN KK)<br>* abstract; figure 1 *<br>* column 6, line 44 - column 7, line 35 * | 1,15,24 | |
| A,D | WO 91 10932 A (BT & D TECHNOLOGIES LTD)<br>* the whole document * | 1,15,24 | **TECHNICAL FIELDS SEARCHED (Int.Cl.6)**<br><br>G02B |
| A | EP 0 736 784 A (NORTHERN TELECOM LTD)<br><br>* abstract; figures 1,4 *<br>* column 4, line 15 - line 32 * | 1,15,16,<br>24 | |
| A | PATENT ABSTRACTS OF JAPAN<br>vol. 010, no. 169 (P-468), 14 June 1986<br>& JP 61 020913 A (MATSUSHITA DENKI SANGYO KK), 29 January 1986,<br>* abstract; figure * | 1,15,24 | |

The present search report has been drawn up for all claims

| Place of search | Date of completion of the search | Examiner |
| :--- | :--- | :--- |
| BERLIN | 12 March 1998 | Hylla, W |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

\& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 97 30 8458

This annex lists the patent family members relating to the patent documents cited in the above-mentioned European search report.
The members are as contained in the European Patent Office EDP file on
The European Patent Office is in no way liable for these particulars which are merely given for the purpose of information.

12-03-1998

| Patent document cited in search report | Publication date | Patent family member(s) | Publication date |
|---|---|---|---|
| US 5490227 A | 06-02-96 | JP 7174946 A | 14-07-95 |
| US 4932989 A | 12-06-90 | CA 2012696 A,C | 05-10-90 |
| | | DE 69008915 D | 23-06-94 |
| | | DE 69008915 T | 01-09-94 |
| | | EP 0391598 A | 10-10-90 |
| | | ES 2055864 T | 01-09-94 |
| | | HK 43395 A | 31-03-95 |
| | | JP 8027412 B | 21-03-96 |
| | | KR 9606843 B | 23-05-96 |
| | | SG 113294 G | 25-11-94 |
| EP 0683410 A | 22-11-95 | JP 7311322 A | 28-11-95 |
| | | US 5530781 A | 25-06-96 |
| WO 9110932 A | 25-07-91 | AU 7173891 A | 05-08-91 |
| | | CA 2073188 A | 17-07-91 |
| | | EP 0511267 A | 04-11-92 |
| | | JP 5503167 T | 27-05-93 |
| | | US 5315680 A | 24-05-94 |
| EP 0736784 A | 09-10-96 | GB 2299683 A | 09-10-96 |
| | | US 5708740 A | 13-01-98 |

For more details about this annex : see Official Journal of the European Patent Office, No. 12/82